# EUROPÄISCHE PATENTSCHRIFT

(11) **EP 1 062 620 B1**
(45) Veröffentlichungstag und Bekanntmachung des Hinweises auf die Patenterteilung: **17.02.2010**
(21) Anmeldenummer: 99919062.2
(22) Anmeldetag: 06.03.1999
(51) Int. Cl.: G06K 7/00

(54) **TERMINAL FÜR CHIPKARTEN**
TERMINAL FOR CHIP CARDS
TERMINAL POUR CARTES A PUCE

(30) Priorität: 13.03.1998 DE 29804510 U
(43) Veröffentlichungstag der Anmeldung: 27.12.2000
(60) Teilanmeldung: 09161226.7
(73) Patentinhaber: Celo Communications R & D Ltd., Dublin 2 (IE)
(72) Erfinder: DEUTSCHMANN, Ingo, D-06237 Leuna (DE)
(74) Vertreter: HOFFMANN EITLE
(86) Internationale Anmeldenummer: PCT/DE1999/000659
(87) Internationale Veröffentlichungsnummer: WO 1999/048038

(56) Entgegenhaltungen:
- WO-A-95/26085
- FR-A- 2 616 938
- US-A- 5 034 596
- US-A- 5 596 718

## Beschreibung

Die Erfindung bezeichnet ein Terminal für Chipkarten, welche als Mikroprozessorkarten ausgeführt sind, vorzugsweise zum Eingeben der Identifikationsnummer über eine integrierte Tastatur in einen in dieser Mikroprozessorkarte befindlichen Mikrocontroller zur Authentifizierung des Nutzers dieser Mikroprozessorkarte.

Es sind aus der IPC (Internationale Patentklassifikation) G07 verschiedene Kontrollvorrichtungen bekannt. Im Zusammenhang mit Finaztransaktionen sind unter G07F 7/08 entsprechend codierte Identitätskarten eingruppiert. Chipkarten werden in immer größerem Maße im Consumerbereich, z.B. als sogenannte "Elektronische Geldbörse" oder zum elektronischen Signieren von Verträgen, eingesetzt. Dazu werden die Chipkarten in geeignete Chipkarten Lese-/Schreibeinheit eingeführt. Die dazu notwendige Steuerlogik ist in der Klasse G06F17/60 klassifiziert. Beispielsweise beschreibt die Druckschrift EP0668579A2 die Nutzung von Chipkarten (Smartcards) zur Geldübertragung.

Chipkarten können unter anderem mit einer Authentifizierung ausgestattet sein. Diese besteht darin, daß die sich die Person, die bestimmte Funktionen einer Chipkarte nutzen will, wie z.B. das Aufladen mit Geldbeträgen bei Geldkarten, oder das Signieren bei Signaturkarten, gegenüber der Chipkarte mit einer PIN (personal identity number) authentifizieren muß. Die Überprüfung der Berechtigung des Benutzers unter Verwendung digitaler Informationen wird in der H04L 9/32 eingruppiert. Dabei muß über eine Identifizierung sichergestellt werden, daß nur der Berechtigte, d.h. authentifizierte Nutzer diese Chipkarte benutzen kann. Dies geschieht üblicherweise durch die Eingabe einer Identifikation durch diesen Nutzer, bsw. durch die Eingabe einer PIN über eine Tastatur. Die Druckschrift EP0552392A1 beschreibt beispielsweise ein Verfahren zur gegenseitigen Authentifikation einer Chipkarte und eines Terminals. Damit soll insbesondere sichergestellt werden, daß die eingegebene Identifizierung sicher zur Chipkarte übertragen wird.

Diese PIN soll aber aus Sicherheitsgünden nicht auf einer mit dem Chipkartenterminal verbundenen EDVA (meist ein PC oder ein anderer Rechner), sondern auf einem im Chipkartenterminal integriertem Tastaturfeld eingegeben werden. Die Druckschrift DE4406602A1 offenbart beispielsweise zur Identifizierung und Authentifizierung von Kommunikationspartnern sicherheitstechnische Einrichtungen mit einer Tastatur zur Eingabe einer PIN, welche mit Chipkarten im Datenaustausch stehen.

Das physikalische Aussehen, sowie die Anzahl und Anordnung der Kontakte der weitverbreitetsten Chipkarten sind standardisiert (siehe ISO/IEC 7816-1,2). Weiterhin sind auch die elektronischen Signale und Übertragungsprotokolle standdardisiert (ISO/IEC 7816-3). Außerdem sind teilweise auch die Kommandos zum Datenaustausch mit der Chipkarte (ISO/IEC 7816-4), insbesondere die Eingabe einer PIN zur Authentifizierung eines Nutzers gegenüber einer Chipkarte, standardisiert. In der Druckschrift EP 347894 wird ein typisches Chipkartenterminal beschrieben. Er besteht aus einer Tastatur, einem Mikroprozessor, einer Chipkarten Lese-/Schreibeinheit, einem Display, sowie einem Drucker. Dabei besteht die Aufgabe des Mikroprozessors unter anderem darin, die Eingabe der PIN auf der Tastatur des Chipkartenterminals zu ermöglichen, diese Eingabe zu verarbeiten und an die Chipkarte weiterzugeben, sowie die Realisierung des Chipkartenprotokolls nach ISO/IEC 7816-3.

Da die Preise für Chipkarten minimal sind, besteht das größte Hemmnis deren Verbreitung in den Herstellungskosten des Chipkartenterminals. Dies ist dadurch gegeben, daß zur Herstellung von herkömmlichen Chipkartenterminals teure Bauelemente, insbesondere Mikroprozessoren, verwendet werden. Wie in der einschlägigen Fachpresse gezeigt (CT 12/94), kann man auch ein Chipkartenterminal ohne Mikroprozessor bauen, indem man die parallele Schnittstelle eines Personalcomputers nutzt. Ähnliche Vorschläge sind auch für die serielle Schnittstelle bekannt (Markus Kuhn 1996). Neben der Steuerung des Chipkartenprotokolls durch die EDVA liegt ein wesentlicher Unterschied zu einem herkömmlichen Chipkartenterminal mit Mikroprozessor dann in der Behandlung der PIN, welche in die EDVA (Personalcomputer) eingegeben wird. Damit ist der Nachteil verbunden, daß diese dort bereits unerlaubt gelesen oder modifiziert werden kann und somit nicht mehr hinreichend sicher ist.

Aus US-5,034,596 ist eine IC-Karten-Bearbeitungsvorrichtung bekannt. Sie umfasst eine Einrichtung zum Lesen bzw. Beschreiben einer IC-Karte. Getrennt von der Schreib/Leseeinrichtung ist eine Tastatur zur Eingabe einer PIN vorgesehen. Ebenso ist ein separates Endgerät, zum Beispiel ein Computer vorgesehen. Gemäß der Lehre der US-5,034,596 ist ein spezieller Schalter vorgesehen, der das Endgerät von der Lese/Schreibeinrichtung entkoppelt, wenn ein Identifikationsvorgang mit PIN-Eingabe stattfindet. Hierzu ist die Lese/Schreibeinrichtung so ausgebildet, dass sie selbstständig einen Kommunikationsaustausch mit der IC-Karte durchführt, da sie von dem Endgerät entkoppelt ist.

Um die oben genannten Kosten eines herkömmlichen Chipkartenterminals zu verringern und trotzdem eine sichere Eingabe der PIN über ein im Chipkartenterminal integriertem Tastaturfeld zu gewährleisten, ist es Aufgabe der Erfindung, ein Chipkartenterminal zu entwickeln, welches ohne Verwendung eines Mikroprozessors die PIN abfragt und direkt an die Chipkarte weitergibt, wodurch diese gegen Erkundung und Modifikation geschützt ist.

Die Aufgabe wird durch die im Patentanspruch 1 aufgeführten Merkmale gelöst. Bevorzugte Weiterbildungen ergeben sich aus den Unteransprüchen.

Das Wesen der Erfindung liegt in der Verwendung einer Torschaltung innerhalb eines einfachen Chipkartenterminals, welche zwischen der Schnittstelle zu einer EDVA und dem I/O Kontakt der Chipkarte angeordnet ist und von der EDVA gesteuert, die an der integrierten Tastatur eingegebene digitale Identifikationsinformation in das Chipkartenprotokoll einfügt .

Die Vorteile der Erfindung liegen in der durch die Torschaltung bedingten einfachen notwendigen Logik zur hinreichend sicheren Einfügung der Identifizierungsinformation in die Chipkarte. Dadurch vereinfacht sich der Aufbau eines Chipkartenterminals wesentlich, wobei insbesondere durch Verzicht auf einen Mikroprozessor kostengünstigere Bausteine eingesetzt werden können. Da das Chipkartenprotokoll selbst in der EDVA generiert wird, ist diesbezüglich eine hohe Flexibilität gegeben.

In den Weiterbildungen der Erfindung ergeben sich weitere Vereinfachungen der Logik durch spezifische Anpassungen an die serielle bzw. die parallele Schnittstelle eines PC's. Die weitgehende Integration aller erforderlichen Komponenten eines Chipkartenterminals in einen Logikbaustein gestattet eine sehr preiswerte Fertigung dieser, wodurch die Verbreitung der Chipkarte wesentlich unterstützt wird. Ebenfalls vorteilhaft ist die Integration dieses Bausteins in die Tastatur der EDVA selbst.

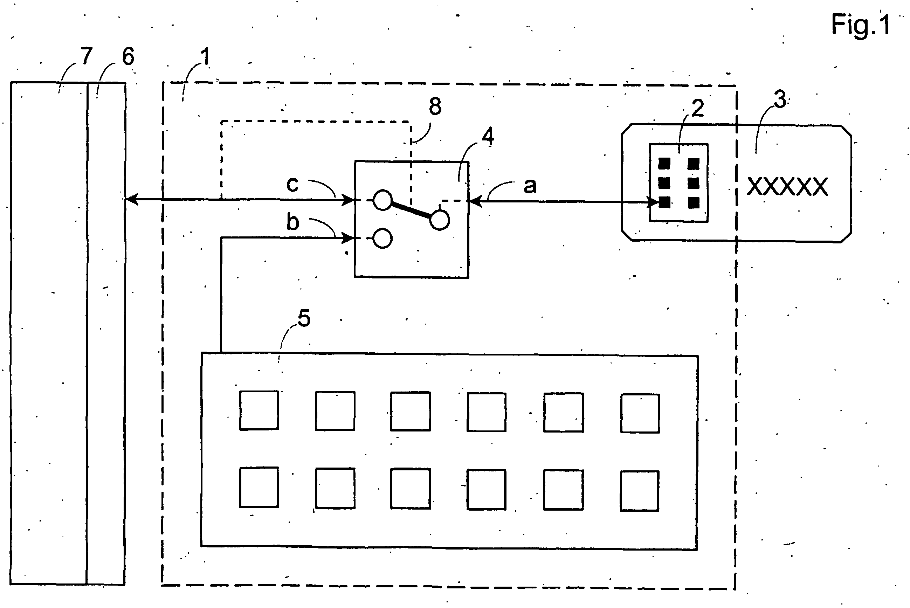

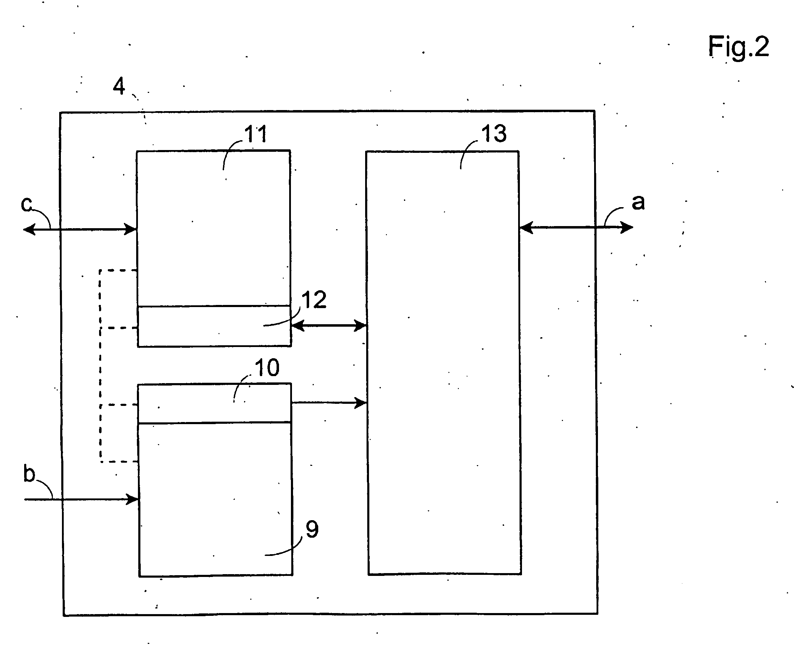

Die Erfindung wird als Ausführungsbeispiel an Hand von Fig. 1 als Prinzipaufbau des Chipkartenterminals Fig. 2 als Prinzipaufbau der Torschaltung näher erläutert.

Nach Figur 1 besteht ein Chipkartenterminal 1 aus einer Kontakteinrichtung 2 für Chipkarten 3, welche mit einer Torschaltung 4 mittels eines Datenpfades a verbunden ist, einer integrierten Tastatureinheit 5, welche mit der Torschaltung 4 mittels eines Datenpfades b verbunden ist, einem Datenpfad c, welcher die Torschaltung 4 und eine Schnittstelle 6 einer EDVA 7 verbindet und eine von der ED-VA 7 über den Datenpfad c kontrollierte Steuerung 8 der Torschaltung 4.

Die Funktionsweise des Chipkartenterminals 1 besteht darin, daß der eigentliche Datenverkehr über die Datenpfade a und c entsprechend dem Chipkartenprotokoll zwischen der Chipkarte 3 und der EDVA 7 durchgeführt wird, wobei dieser von der EDVA 7 generiert wird. Die integrierte Tastatureinheit 5 stellt über die Eingabe des Nutzers die erforderliche digitale Identifizierungsinformation, bsw. eine PIN sowie optional deren Prüfsumme, bereit, mit der die Chipkarte 3 den Nutzer als berechtigt authentisieren kann. Die EDVA 7 generiert entsprechend dem Chipkartenprotokoll den Datenverkehr zur Chipkarte 3 über den Datenpfad c und gibt zusätzlich über den Datenpfad c den Befehl, welcher die Steuerung 8 der Torschaltung 4 bewirkt, zum Einfügen der Identifizierungsinformation vom Datenpfad b in den resultierenden Datenpfad a.

Das Chipkartenterminal 1 stellt alle zum Betrieb des Mikroprozessors der Chipkarte 3 erforderlichen Quellen (Stromversorgung, Takt, etc.) über die Kontakteinrichtung bereit. Es ist optional möglich, die Torschaltung 4 mit einer FIFO-Funktion (first in first out memory) auszuführen. Der Datenpfad c ist ein- oder mehradrig ausgeführt und bietet die Möglichkeit zum bidirektionalen Datenaustausch. Er ist vorzugsweise mit der standardisierten parallelen bzw. in einer anderen Ausführung mit der seriellen Schnittstelle der EDVA 6 in der speziellen Ausführung eines PC's verbunden. Die Steuerung 8 der Torschaltung 4 erfolgt über eine spezielle Steuerleitung innerhalb des Datenpfades c oder durch geeignete Filterung der Daten auf diesem Datenpfad c. Es ist vorteilhaft möglich, alle im Chipkartenterminal erforderlichen logischen Komponenten (Torschaltung 4, Tastaturlogik und Speicher, Takterzeugung für die Chipkarte usw.) in einem geeigneten Logikschaltkreis, bsw. einen FPGA (free programmable gate array), zu integrieren. Ebenso ist es möglich, das Chipkartenterminal 1 in die Tastatur der EDVA 7 unter Nutzung dieser und der Tastaturschnittstelle zu integrieren.

Die Funktionsweise des Chipkartenterminals 1 besteht darin, daß der eigentliche Datenverkehr entsprechend dem Chipkartenprotokoll zwischen der Chipkarte 3 und der EDVA 7 durchgeführt wird, wobei dieser von der EDVA 7 gesteuert wird.

Nach Fig. 2 kann die Torschaltung 4 im einzelnen aus einem mit dem Datenpfad b verbunden Tastaturdekoder 9, der mit einem Identifizierungsinformationsspeicher 10 verbunden ist, aus einer mit dem Datenpfad c verbunden Steuerlögik 11 mit Steuerregister 12, welche intern mit dem Tastaturdekoder 9 und/oder dem Identifizierungsinformationspeicher 10 verbunden ist, und einem als Tor dienendem seinerseits mit dem Datenpfad a verbundenen Befehlsspeicher 13 bestehen. Der Befehlsspeicher 13 ist optional mit einer FIFO-Funktion ausgeführt.

Durch die Verbindung des Tastaturdekoders 9 mit der Steuerlogik 11 ist es möglich, spezielle Eingaben des Benutzers wie die Tasten "*" und '#' an die Steuerlogik 11 zu melden. Durch die Verbindung des Identifizierungsinformationspeicher 10 mit der Steuerlogik 11 ist es weiterhin möglich, die Anzahl der eingegebenen Stellen der Identifizierungsinformation durch die Steuerlogik 11 abzufragen. Diese legt dann diese Informationen in dem Steuerregister 12 ab, welches von der EDVA über den Datenpfad c abgefragt werden kann.
Weiterhin enthält das Steuerregister 12 die Chipkartenkommunikationsparameter nach ISO/IEC 7816 3, welche von der EDVA aus eingestellt werden können.

Die Steuerlogik 11 gewährleistet verschiedene Übertragungsszenarios.

### I. Transparentmodus

In diesem Modus empfängt die EDVA Daten von der Chipkarte oder kann Daten an die Chipkarte senden. Dabei werden die Befehle einfach durch das Befehlsregister 12 durchgereicht.

### II. Identifizierungsinformationspeicher 10 füllen

Dabei empfängt der Identifizierungsinformationspeicher 10 über den Tastaturdecoder 9 von der Tastatureinheit die vom Nutzer eingegebene Identifizierungsinformation. Diese wird im Identifizierungsinformationspeicher 10 zur weiteren Verwendung zwischengespeichert. Ein Endekennzeichen kann auf einer speziellen Taste der Tastatureinheit durch den Benutzer eingegeben werde. Dieses Endekennzeichen wird der Steuerlogik 11 gemeldet, welche im Steuerregister 12 die Information hinterlegt, daß eine Identifizierungsinformation eingegeben wurde. Außerdem kann seitens der EDVA auch die Anzahl der Stellen der Identifizierungsinformation von der Steuerlogik 11 abgefragt werden, um z.B. eine zu kurze Eingabe zu erkennen, und den Nutzer zu einer neuen Eingabe aufzufordern.

### III. Identifizierungsinformationspeicher 10 löschen

Die EDVA sendet das Kommando "Identifizierungsinformation löschen" an die Steuerlogik 11, worauf diese den Identifizierungsinformationspeicher 10 zurücksetzt. Dies ist z.B. von Vorteil, falls der Nutzer eine Fehleingabe tätigte. Der Identifizierungsinformationspeicher 10 kann weiterhin auch durch eine Spezialtaste auf der Tastatureinheit gelöscht werden.

### IV. Steuerregister 12 setzen

Die EDVA sendet das Kommando "SetFlag" an die Steuerlogik 11, worauf die Steuerlogik 11 das Steuerregister 12 mit den mitgesendeten Werten füllt. Dabei werden folgende Werte übertragen: CRC und Parität. Diese werden dann beim Senden des "Verify" Kommandos als Einstellungen für das Protokoll genutzt.

### V. Status holen

Die EDVA sendet das Kommando "GetStatus" an die Steuerlogik 11, worauf diese als Rückgabewert die Statusinformationen des Steuerregisters 12 sendet (Anzahl der eingegebenen Stellen, aufgetretene Fehler).

### VI Ausgabemodus

Wenn von der Chipkarte eine Authentifizierung des Nutzers (wie z.B. in ISO/IEC 7816 4 Absatz 6.12 dargestellt) für einen bestimmten Befehl nötig ist, wird die Torschaltung durch den Befehl "SetAusgabe", welcher durch den EDVA gesendet wird, in den Ausgabemodus geschaltet. Das heißt, daß die EDVA zuerst die Steuerlogik 11 über den folgenden "Verify" Befehl informiert. Der Befehl "SetAusgabe" enthält außerdem die Information darüber, ab welcher Stelle des Befehles die Identifikationsinformation des Identifikationsinformationsspeichers 10 einzublenden ist. Anschließend sendet die EDVA den vollständigen. "Verify" Befehl (nach ISO/IEC 7816-4 Seite 26 ff). Wenn dieser durch das Befehlsregister 13 getaktet wird, wird vom Steuerregister 12 veranlaßt, daß die Identifikätionsinformation vom Identifikationsinformationsspeichers 10 in den Befehlsstrom des Datenpfades a eingebracht wird. Dabei ist es möglich, daß abhängig vom Steuerregister 11 weitere Bytes an den "Verify" Befehl angehängt oder ausgetauscht werden. Dies ist z.B. nötig um etwaige CRC Bytes anzuhängen, sowie die Parität einzustellen. Es ist weiterhin möglich, daß die Steuerlogik 11 auf das Auftreten einer (vorher in der Steuerlogik 11 festzulegenden) Befehlssequenz der EDVA automatisch das Einfügen der Identifikationsinformation ab der (ebenfalls vorher festzulegenden) Stelle der Befehlssequenz vornimmt. Dadurch entfällt das ansonsten notwendige explizite Umschalten in den Ausgabemodus VI durch die EDVA.

### Verwendete Bezugszeichen

- 1: Chipkartenterminäl
- 2: Kontakteinrichtung
- 3: Chipkarten
- 4: Torschaltung
- 5: Tastatureinheit
- 6: Schnittstelle
- 7: EDVA
- 8: Steuerung
- 9: Tastaturdekoder
- 10: Identifizierungsinformationsspeicher
- 11: Steuerlogik
- 12: Steuerregister
- 13: Befehlsspeicher
- a: Datenpfad zu Chipkarte
- b: Datenpfad zu Tastatureinheit
- c: Datenpfad zur EDVA

## Patentansprüche

1. Chipkartenterminal (1) für Chipkarten, welche einen Mikrocontroller beinhalten, wobei das Chipkartenterminal (1) eine Kontakteinrichtung (2) für Chipkarten (3) und eine integrierte Tastatureinheit (5) beinhaltet und mit einer Schnittstelle (6) einer EDVA (7) über einen ersten Datenpfad (c), welcher einen bidirektionalen Datenaustausch ermöglicht, verbindbar ist, wobei
das Chipkartenterminal (1) eine über eine Steuerung (8) kontrolliert Torschaltung (4) beinhaltet, welche mit einer Chipkarte (3) über die Kontakteinrichtung (2) mittels eines zweiten Datenpfades (a) verbindbar ist, mit der integrierten Tastatureinheit (5) mittels eines dritten Datenpfades (b) verbunden ist, sowie mit der Schnittstelle (6) der EDVA (7) mittels des ersten Datenpfads (c) verbindbar ist, und das Chipkartenterminal (1) eingerichet ist, um einen von der EDVA (7) generierten Befehl Verify zur Chipkarte (3) über den ersten Datenpfad (c) zu empfangen, und zusätzlich über den ersten Datenpfad (c) einen Steuerungsbefehl Set Ausgabe zu empfangen, welcher die Steuerung (8) der Torschaltung (4) bewirkt, zum Einfügen von Identifizierungsinformation vom dritten Datenpfad (b) in den Befehlsstrom des zweiten Datenpfads (a), wobei der Steuerungsbefehl Information darüber enthält, an welcher Stellen des von der EDVA generierten Befehls zur Chipkarte die Identifikationsinformation einzublenden ist.

2. Chipkartenterminal nach Anspruch 1, **dadurch gekennzeichnet,**
**dass** die Torschaltung (4) zur Kommunikation über den ersten Datenpfad (c) speziell für eine standardisierte serielle Schnittstelle, eine standardisierte parallele Schnittstelle oder eine standardisierte Tastaturschnittstelle ausgeführt ist.

3. Chipkartenterminal nach Anspruch 1 oder Anspruch 2, **dadurch gekennzeichnet,**
**dass** die Torschaltung (4) mit weiteren zum Betrieb des Chipkartenterminals (1) erforderlichen logischen Komponenten in einem Logikschaltkreis integriert ist.

4. Chipkartenterminal nach einem der Ansprüche 1 bis 3, **dadurch gekennzeichnet,**
**dass** das Chipkartenterminal (1) in die Tastatur der EDVA (7) integriert ist, deren integrierte Tastatureinheit (5) über den dritten Datenpfad (b) mit der Torschaltung (4) verbunden ist, welche über den ersten Datenpfad (c) mit der Schnittstelle (6) in Form der Tastaturschnittstelle verbunden ist.

5. Chipkartenterminal nach einem der Ansprüche 1 bis 4, **dadurch gekennzeichnet,**
**dass** die Torschaltung (4) im einzelnen aus einem mit dem dritten Datenpfad (b) verbundenen Tastaturdecoder (9), der mit einem Identifizierungsinformationsspeicher (10) verbunden ist, aus einer mit dem ersten Datenpfad (c) verbundenen Steuerlogik (11) mit Steuerregister (12), welche intern mit dem Tastaturdecoder (9) und/oder dem Identifizierungsinformationsspeicher (10) und einem seinerseits mit dem zweiten Datenpfad (a) verbundenen Befehlsspeicher (13) verbunden ist, wobei der Befehlsspeicher (13) optional mit einer FIFO-Funktion ausgeführt ist.

## Claims

1. Chip card terminal (1) for chip cards that contain a microcontroller, where the chip card terminal (1) contains a contact means (2) for chip cards (3) and an integrated keyboard unit (5), and is connectible to an interface (6) of an electronic data processing device (7) over a first data path (c) that allows a bi-directional data exchange, where
said chip card terminal (1) contains a gate circuit (4) controlled via a control (8), which gate circuit (4) is connectable with a chip card (3) via the contact means (2) over a second data path (a), is connected with the integrated keyboard unit (5) over a third data path (b) and is connectable with the interface (6) of the electronic data processing device (7) over the first data path (c), and the chip card terminal (1) is arranged for receiving over the first data path (c) an instruction (Verify) to the chip card (3) generated by the electronic data processing device (7), and additionally for receiving over the first data path (c) an instruction (SetAusgabe), which provides the control (8) of the gate circuit (4), for inserting of identification information from the third data path (b) into the instruction stream of the second data path (a), where the instruction contains information at which location of the instruction to the chip card generated by the electronic data processing device the identification information is to be inserted.

2. Chip card terminal according to claim 1, **characterized in that** the gate circuit (4) is arranged specifically for the communication over the first data path (c) for a standardised serial interface, a standardised parallel interface or a standardised keyboard interface.

3. Chip card terminal according to claim 1 or claim 2, **characterized in that** the gate circuit (4) is integrated into a logic circuit together with further logical components required for operating the chip card terminal (1).

4. Chip card terminal according to one of claims 1 to 3, **characterized in that** the chip card terminal (1) is integrated into the keyboard of the electronic data processing device (7), the integrated keyboard unit (5) of which is connected with the gate circuit (4) over the third data path (b), which is connected over the first data path (c) with the interface (6) in the form of a keyboard interface.

5. Chip card terminal according to one of claims 1 to 4, **characterized in that** the gate circuit (4) is embodied individually out of a keyboard decoder (9), which is connected with the third data path (b) and which is connected with an identification information memory (10), out of a control logic (11) that is connected with a first data path (c) with a control register (12), which control logic is internally connected with the keyboard decoder (9) and/or the identification information memory (10) and an instruction memory (13) that is in turn connected to the second data path (a), wherein the instruction memory (13) is optionally provided with a FIFO function.

## Revendications

1. Terminal pour cartes à puce (1) pour des cartes à puces contenant un microcontrôleur, le terminal pour cartes à puce (1) contenant un dispositif de mise en contact (2) pour des cartes à puce (3), et une unité de clavier (5) intégrée, et étant susceptible d'être relié à une interface (6) d'une installation de traitement des données - EDVA (7), par l'intermédiaire d'un premier chemin de données (c), permettant un échange d'information bidirectionnel, où
le terminal pour cartes à puce (1) contient un circuit porte combinatoire (4) commandé par une commande (8), le circuit porte combinatoire (4) est susceptible d'être relié à une carte à puce (3), au moyen d'un deuxième chemin de données (a), par l'intermédiaire du dispositif de mise en contact (2), le circuit porte combinatoire (4) est relié à l'unité de clavier (5) intégrée au moyen d'un troisième chemin de données (b), et est susceptible d'être relié à l'interface (6) de l'EDVA (7) au moyen du premier chemin de données (c), et le terminal pour cartes à puce (1) est équipé pour recevoir, sur le premier chemin de données (c), un ordre (verify), généré par l'EDVA (7) et destiné à la carte à puce (3) et, en plus, recevoir, sur le premier chemin de données (c), un ordre de commande (set Ausgabe) provoquant, de la part de la commande (8) du circuit porte combinatoire (4), l'introduction d'information d'identification, à partir du troisième chemin de données (b), dans le flux d'ordres du deuxième chemin de données (a), l'ordre de commande contenant de l'information concernant l'emplacement, de l'ordre généré par l'EDVA et à destination de la carte à puce, auquel l'information d'identification doit être mélangée.

2. Terminal pour cartes à puce selon la revendication 1, **caractérisé en ce que**
le circuit porte combinatoire (4) est réalisé pour la communication avec l'EDVA, sur le premier chemin de données (c), spécialement pour une interface série standardisée, une interface parallèle standardisée, ou une interface par clavier standardisée.

3. Terminal pour cartes à puce selon la revendication 1 ou la revendication 2, **caractérisé en ce que**
le circuit porte combinatoire (4) est intégré dans un circuit logique, avec d'autres composants logiques, nécessaires au fonctionnement du terminal pour cartes à puce (1).

4. Terminal pour cartes à puce selon l'une des revendications 1 à 3, **caractérisé en ce que**
le terminal pour cartes à puce (1) est intégré dans le clavier de l'EDVA (7), dont l'unité de clavier (5) intégrée est reliée, par le troisième chemin de données (b), au circuit porte combinatoire (4), qui est relié, par le premier chemin de données (c), à l'interface (6), sous la forme d'une interface à clavier.

5. Terminal pour cartes à puce selon l'une des revendications 1 à 4, **caractérisé en ce que**
le circuit porte combinatoire (4) est composé, respectivement,
d'un décodeur pour clavier (9), relié au troisième chemin de données (b) et relié à une mémoire d'information d'identification (10),
d'une logique de commande (11) reliée au premier chemin de données (c), avec un registre de commande (12), la logique de commande étant reliée en interne au décodeur pour clavier (9) et/ou à la mémoire d'information d'identification (10), et reliée à une mémoire d'ordres (13), reliée de son côté au deuxième chemin de données (a), la mémoire d'ordres (13) étant, en option, réalisée avec une fonction FIFO.
à l'interface (6) et munie d'un la logique de commande et d'une reliée de son côté au dispositif de mise en contact (2), 1 la mémoire d'ordres (13)
